Europäisches Patentamt

(19) European Patent Office

Office européen des brevets

(11) Publication number: **0 263 697**
A2

(12) **EUROPEAN PATENT APPLICATION**

(21) Application number: 87308893.4

(22) Date of filing: 07.10.87

(51) Int. Cl.⁴: **C 09 K 19/30**
G 02 F 1/133, G 02 F 1/29

(30) Priority: 07.10.86 GB 8624071
20.01.87 GB 8701174

(43) Date of publication of application:
13.04.88 Bulletin 88/15

(84) Designated Contracting States:
AT BE CH DE ES FR GB GR IT LI LU NL SE

(71) Applicant: BRITISH TELECOMMUNICATIONS plc
British Telecom Centre 81 Newgate Street
London EC1A 7AJ (GB)

(72) Inventor: Winter, Christopher Simon
16 Saddlers Place Martlesham Heath
Ipswich Suffolk (GB)

Rush, James Douglas
18 York Road Martlesham Heath
Ipswich Suffolk (GB)

(74) Representative: Leng, Francis Edward et al
British Telecom Intellectual Property Unit Room 1304 151
Gower Street
London WC1E 6BA (GB)

(54) Liquid crystal compositions.

(57) A nematic liquid crystal composition, suitable for forming optical switches in conjunction with silica, which comprises a mixture of nematic liquid crystal components each of which has the formula:-
R'-(C$_6$H$_{10}$)-X-(C$_6$H$_{10}$)-R''
wherein
(C$_6$H$_{10}$) represents a cyclohexane residue with its substituents in the para positions,
R' and R'' represent alkyl or alkoxy groups with 1 to 6 carbon atoms;
and
X represents a bridge.

**Description**

LIQUID CRYSTAL COMPOSITIONS BY PATENT CASE A23509 (WP:0632p SUBS

This invention relates to liquid crystal compositions and in particular to liquid crystal compositions having refractive indexes similar to the refractive index of silica.

The art of optical telecommunications has now reached the stage where there is a need for switches which control the passage of infra red radiation, eg signals at 1.3 micrometers and 1.55 micrometers. It is desirable to provide the switches in a form similar to the optical fibre which is used to convey the signals and many architectures implemented in silica have been proposed for this purpose.

These architectures usually comprise one or more silica path regions in the vicinity of an active confining region. Thus a blocking (or polarisation) switch comprises a single path region associated with a confining region which includes a control region switchable between two different refractive indices. One of these indices is lower than the index of the path region, corresponding to an "on" state, whereas the other index is higher than that of the path region corresponding to an "off" state. A different device, often known as a "coupled switch", comprises two path regions located in a common control region switchable between two different refractive indices. In a coupled switch device both control indices are lower than the indices of the path regions (and the two path regions usually have the same index). This device enables signals to be controllably switched from one path region to the other.

It has also been proposed to use liquid crystals, under suitable control, to implement the control region in devices as described above. In such implementations the ordinary index represents the lowest available and the extraordinary the highest, but intermediate values can be selected by suitably chosen controls.

It is convenient to make optical switches out of silica, with various dopants to adjust the refractive index. In these devices the path regions usually have refractive indices in the range 1.458 to 1.468. It is difficult to find liquid crystal compositions which are index matched for this range and liquid crystal devices have to operate at inconveniently high temperatures to achieve a suitable match, ie temperatures above 30 C.

Many liquid crystal compounds and blends of compounds have been proposed for a variety of end uses but the matching of refractive index to silica (or doped silica) does not appear to have received attention. For example, French patent specification 2465707 discloses many liquid crystal compounds and it proposes blends, eg eutectic blends, in order to produce desired operative parameters. Thus the document proposes blends to control the melting point, the temperature range for the existence of the nematic state, dielectric anisotropy, viscosity and birefringence. In particular it discloses a blend of butylcyclohexyl propylcyclohexanoate and 4-cyanophenyl pentylcyclohexanate. The refractive index and its match to silica is not considered.

This invention relates to liquid crystal compositions which can be used at ambient temperatures, eg 15 C to 30 C, in conjunction with substrates having refractive indices in the range 1.458 to 1.468, eg doped silica.

To make a blocking switch the liquid crystal composition must have the following properties at operative temperatures and operative wave lengths, eg 1.3 micrometers and 1.55 micrometers:-

    (a) It must exist in the nematic phase.

    (b) Its ordinary refractive index must be below that of the path region.

    (c) Its extra-ordinary refractive index must be above that of the path region.

    (d) Preferably its birefringence (ie the value of its extra-ordinary minus ordinary indices) should be greater than 0.001.

According to this invention, a nematic liquid crystal composition comprises a mixture of nematic liquid crystal components each of which has the formula:-

$R'-(C_6H_{10})-X-(C_6H_{10})-R''$

wherein

$(C_6H_{10})$ represents a cyclohexane residue with its substituents in the para positions,

R' and R" represent alkyl or alkoxy groups, preferably straight chain alkylgroups, with 1 to 6 carbon atoms; and

X represents a bridge conferring a dipole moment on the molecule.

Suitable values of X include:-

$-CH_2-CH_2-$; $-CH=CH-$; $-N=N-$; $-CH=N-$; $-NO=N-$; and the preferred value which is $-CO-O-$.

The relative proportions of the components are chosen to give the desired optical properties, eg the silica-matched properties specified above. It has been found that achievement of these properties usually requires at least 10% and often at least 20% of each of at least two compounds of the general formula. (In this specification all percentages are by weight based on the total composition).

Particularly suitable blending components include the four compounds of the formula:-

$CH_3(CH_2)_x-(C_6H_{10})-CO-O-(C_6H_{10})-(CH_2)_yCH_3$

wherein

    (A33) x = 2 and y = 2; or
    (B53) x = 4 and y = 2; or
    (B35) x = 2 and y = 4; or
    (C44) x = 3 and y = 3

The blends are conveniently made by melt-mixing the individual components in the appropriate ratio.

It should be understood that the liquid crystal blends of the compounds specified above provide the operational properties characteristic of the invention, ie they can be used to control switching in silica wave guides and they are suitable for use at ambient temperatures. As well as the liquid crystal components, the blend may also contain conventional additives, eg non-liquid crystal materials, which have substantially no effect on the operational properties identified above.

The invention also includes optical switches which comprise a confining region associated with at least one path region wherein said confining region comprises a nematic liquid crystal composition according to the invention. Preferably the or each path region has a refractive index in the range 1.458 to 1.468, eg suitably doped silica.

Two methods of actuating a switch according to the invention will be mentioned. These are:-
 (1) Electrical actuation;
 (2) Actuation by electromagnetic radiation, eg by a control beam.

For electrical actuation of the switch, the liquid crystal composition is in operative relationship with electrodes for controlling its refractive index. For radiation actuation it is necessary to have at least two path regions operatively associated with the liquid crystal, ie one to convey signals and one to convey control radiation.

The surfaces are provided with conventional surface treatments to procure the correct orientation of the molecules of the liquid crystal composition. Suitable treatments include:-
 (i) Thorough cleaning to cause the molecules to align with their long axes normal to the silica surface.
 (ii) Applying surface coatings to align the liquid crystals homeotropically.
 iii) Rubbing the surface to align the molecules with their long axes parallel to the surface.
 (iv) Applying a thin interlayer, eg polyvinyl alcohol, and rubbing to cause the long axes of the molecules to orient tangentially to the surface.

After surface treatment the liquid crystal composition is applied in the melt and allowed to solidify.

Three compositions according to the invention will now be described by way of example. Devices incorporating these compositions are illustrated in the accompanying drawings in which:-
 Figure 1 is a transverse cross section through a blocking switch;
 Figure 2 is a view showing the interfacing surface of the path section of the switch before the liquid crystal composition was applied;
 Figure 3 is a view showing the interfacing surface of the electrode section of the switch before assembly; and
 Figure 4 is a transverse cross section of a coupled switch (which is a modification of the switch shown in Figure 1).

These examples utilise three liquid crystal components available from Merk. These components have the structures:-

A33)
$CH_3(CH_2)_2-C_6H_{10}-CO-O-C_6H_{10}-(CH_2)_2CH_3$

B53)
$CH_3(CH_2)_4-C_6H_{10}-CO-O-C_6H_{10}-(CH_2)_2CH_3$

C44)
$CH_3(CH_2)_3-C_6H_{10}-CO-O-C_6H_{10}-(CH_2)_3CH_3$

In these formulas $C_6H_{10}$ always represents a cyclohexane residue which is in the all-trans configuration and having two substituents in the para positions.

Nematic liquid crystal compositions X, Y and Z were prepared from these components; these compositions consisted of:-

TABLE 1

| Composition | X | Y | Z |
|---|---|---|---|
| % Component A33 | 65 | 50 | 50 |
| % Component B53 | 35 | 50 | 30 |
| % Component C44 | -- | -- | 20 |
| TOTAL | 100 | 100 | 100 |

In each case, the composition was made by weighing the components into a glass vessel which was heated to a point where all the components were observed by polarising microscopy to have melted. The mixture was stirred and allowed to cool. This heating and cooling cycle was repeated several times so that observation could confirm that there were no anomolous regions with markedly different transition points.

The following properties were measured on compositions X, Y and Z:

TABLE 2

| LIQUID CRYSTAL | Nematic Range (°C) | RI Difference x $10^4$ 25°C | 30°C |
|---|---|---|---|
| X | 7 – 42 | 3 | –6 |
| Y | 15 – 47 | 3 | –6 |
| Z | 16 – 44 | 3 | –6 |

Each RI difference is the refractive index of $SiO_2$ - the refractive index of the composition, both measured at the temperature stated with radiation of 550nm.

It will be appreciated that the refractive indices are not measured with infra red because it is easier to carry out measurements with visible radiation and to carry out standard calculations.

The compositions X-Z have offer a significant advantage over the pure materials A-C. Of the three pure materials only A possesses a room temperature nematic W phase, but this is over a narrow and slightly elevated range (24-32 C). The narrow range leads to various pretransistional behaviours that give a slightly higher index than that of X-Z. The other two materials have transition temperatures at markedly higher values (greater than 40 C) and C posses only a narrow nematic phase region. All the mixtures have wide temperature ranges that span the desired region 15-30 C.

Switch devices incorporating a liquid crystal composition according to the invention will now be described.

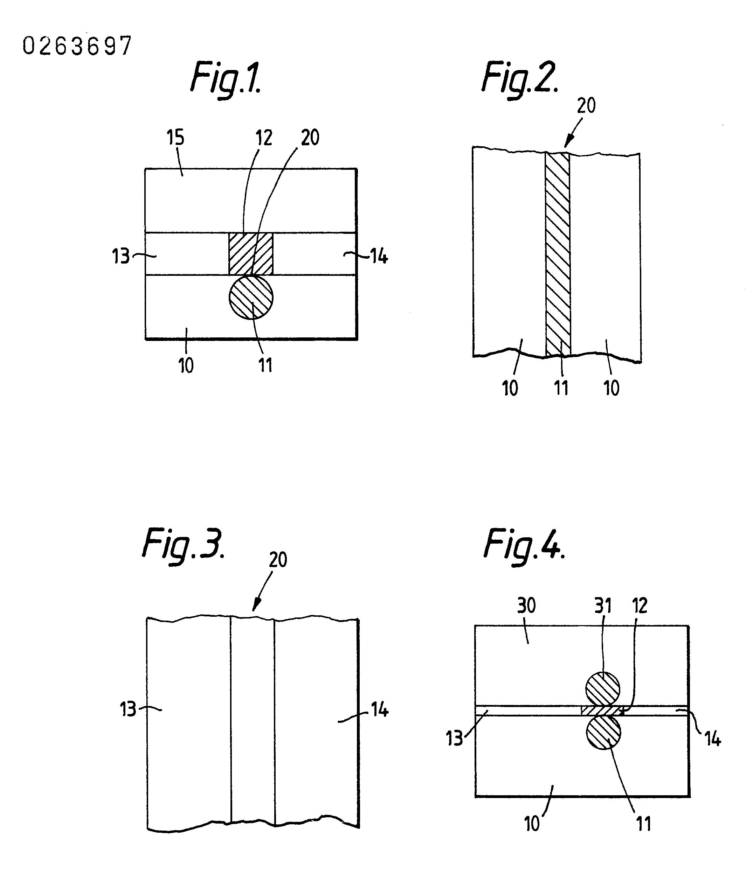

As shown in Figure 1, a blocking switch comprises a silica confining region 10 with a doped silica path region 11 having an interface 20 in contact with liquid crystal 12, ie one of compositions X, Y or Z as defined in Table 1. Liquid crystal 12 is located between control electrodes 13 and 14 which, as extra support, are secured to a silica block 15. This architecture is conventional; the invention resides in the use of one of compositions X, Y or Z.

Suitable dimensions are as follows:-
Path region 11    8 microns diameter
Control electrode 13, 14    1mm thick
Liquid crystal 12    20 microns between electrodes.

The silica path region 11 has a refractive index of 1.463 and the silica confining region has a refractive index of 1.458 measured at 589nm.

The assembly of the switch will now be described with reference to Figures 2 and 3 which shows the switch in two separate sections, namely a path section and an electrode section.

The path section takes the form of a silica block having the interface surface 20 exposed. Surface 20 comprises the exposed surfaces of the confining region 10 with a central strip of exposed path region 11.

The electrode section comprises the silica block 15 and both electrodes 13, 14 which are secured to block 15 in the correct spacing.

The preparation of the two sections for assembly will now be described.

The treatment of the path section comprised dipping the surface 20 into an aqueous solution of polyvinyl alcohol and circularly rubbing the dried coating with a soft tissue dipped in ethanol. (The polyvinyl alcohol had a molecular weight of $8 \times 10^4$. The solution had a concentration of 1gm per 100ml of de-ionised water).

The electrode section was prepared by sonication for 5 minutes in ethanol followed by coating with phophatidyl choline.

(The solution used for this coating consisted of:
phophatidyl choline    1mg
chloroform    0.9ml
methanol    0.1ml
diethyl ether    to make 1000ml).

After both coatings had been carried out the respective sections were dried by a hot air gun for 1-2 minutes.

To assemble the switch 10 microliters of fluid composition X, Y or Z were placed on region 11 of surface 20 and the electrode section was placed in contact. With an electric field applied across the electrodes 13 and 14 the relative position of the two components was adjusted to maximum light transmission. There was no light transmission with the field off, ie the device is an on/off switch. It controlled all polarisations of radiation equally which is an advantageous and surprising result.

Figure 4 shows a coupled switch which is a modification of the device of Figure 1. In this modification, silica block 15 also has a confining region 30 and a path region 31 and the electrodes 13, 14 are very thin, eg 0.1 to 100 microns. The device is assembled substantially as explained above.

It will be noticed that the two paths 11 and 31 are close together and in contact with a common liquid crystal region 12. With the field on radiation transfers from one path to the other. With the field off the device behaves as two independent and separate paths.

The device shown in Figure 4 may also be actuated by electro-magnetic radiation. In use, the device has four ports, ie path 11 has two ports, entry and exit, and path 31 also has two ports. Although the signal function requires two exit ports it only requires one entry port. Thus there is one port not required by the signal function and this port provides access for a control beam.

Since the device is symmetrical, allocation of these functions can be made in several ways. For convenience of description it will be taken that one end of path 11 is the single input port for signals and its other end is one of the exit ports. One end of path 31 is also an exit port and the other end is the control port for receiving a control beam.

When, in use, a control beam is applied to the control port, the fields associated therewith extend beyond path 31 and affect the liquid crystal 12. This alters its refractive index and signals switch from path 11 to 31 and proceed to the exit port associated therewith. The exit signal may be contaminated with control radiation, but this is removed by filtering (which could be inherent in the system).

In the absence of a control beam, the refractive index of the liquid crystal is unaffected and the signals remain in path 11. There is, of course, no contamination.

The electrodes 13 and 14 are not required for optical control. In specially made devices they are replaced by inert or insulating regions.

Although the precise mechanism that causes this device to function in a polarisation independent manner is not clear, the most reasonable explanation is given below. If the electrode surface and the waveguide surface were both homeotropic as a result of the treatment they received, then if the electrode structure were not in close contact with the waveguide surface, the bottom layer of liquid crystal would be splayed, that is bent round so that the orientation of the liquid crystal changed continuously from being parallel to the path region to being perpendicular to it as one traversed between the electrodes. This would lead to a surface layer with an average index that was higher in value than the path region in both the principal polarisation directions and thus the switch would be polarisation independent and switched off in the absence of an electric field. When a field was switched on the liquid crystal was observed to orient with the director along the waveguide direction (parallel to the electrodes) as would be expected for a negative dielectric anisotropy material. Both polarisations would now see the ordinary index which is low enough for transmission to occur. Thus a polarisation independent switch would result that was "off" with zero applied field and "on" with a suitable applied voltage (5-25 V in this example).

## Claims

1. A nematic liquid crystal composition which comprises a mixture of nematic liquid crystal components each of which has the formula:-

$R'-(C_6H_{10})-X-(C_6H_{10})-R''$

wherein

$(C_6H_{10})$ represents a cyclohexane residue with its substituents in the para positions,

R' and R" represent alkyl or alkoxy groups with 1 to 6 carbon atoms;

and

X represents a bridge.

2. A composition according to claim 1, wherein all the alkyl groups are straight chain alkyl groups.

3. A composition according to either claim 1 or claim 2, wherein all the X groups are selected from:-
$-CH_2-CH_2-$; $-CH=CH-$; $-N=N-$; $-CH=N-$; $-NO=N-$; and $-CO-O-$.

4. A composition according to either claim 1 or claim 2, wherein all the X groups are $-CO-O-$.

5. A composition according to claim 1, which consists essentially of a blend of at least two compounds of the formula:-

$CH_3(CH_2)_x-(C_6H_{10})-CO-O-(C_6H_{10})-CH_2)_yCH_3$

the said compounds being defined by:-

$x = 2$ and $y = 2$,
$x = 4$ and $y = 2$,
$x = 2$ and $y = 4$, and
$x = 3$ and $y = 3$

respectively.

6. A composition according to any one of the preceding claims, which exists in the nematic phase for all temperatures in the range 15 C to 30 C.

7. A composition according to any one of the preceding claims, which consists of a blend containing at least 10% by weight of each of at least two of said components.

8. A composition according to claim 7, which contains at least 20% by weight of each of at least two of said components.

9. An optical switch which comprises a confining region associated with at least one path region wherein said confining region comprises a control region formed of a nematic liquid crystal composition according to any one of the preceding claims.

10. An optical switch according to claim 9 which comprises a confining region and a single path region which is adjacent to a control region comprised in the confining region, said control region being formed of a nematic liquid crystal composition according to any one of claims 1 to 8, said control region being in operative relationship with electrodes adapted to control the state of the control region whereby said switch has an "on" state in which optical signals are confined to the path region and an "off" state in which signals are permitted to escape from the path region.

11. An optical switch according to claim 9, which comprises a confining region and two path regions, each of which is adjacent to a common control region comprised in the confining region, said control region being formed of a nematic liquid crystal composition according to any one of claims 1 to 8.

12. An optical switch according to claim 11, in which said control region is in operative relationship with electrodes which are adapted to control the state of the control region whereby said switch has a first state in which optical signals are permitted to transfer between the two path regions and a second state in which such exchange is not permitted.

13. An optical switch according to any one of claims 9 to 12, wherein the or each path region has a refractive index in the range 1.458 to 1.468 measured at 589nm.

14. An optical switch according to claim 13, wherein the or each path region is implemented in silica or doped silica.

0263697

Fig.1.

Fig.2.

Fig.3.

Fig.4.